# EUROPÄISCHE PATENTANMELDUNG

(11) **EP 1 958 721 A1**
(43) Veröffentlichungstag der Anmeldung: **20.08.2008**
(21) Anmeldenummer: 08002445.8
(22) Anmeldetag: 11.02.2008
(51) Int. Cl.: B23D 21/00, B23D 35/00

(54) **Verfahren und Vorrichtung zum Trennen von Halbzeugen für den Einsatz in leitungsintegriertren Wärmeaustauschern**

(30) Priorität: 14.02.2007 DE 102007007228
(71) Anmelder: Behr Kirchberg Gmbh, 08102 Kirchberg (DE)
(72) Erfinder: Keilberg, Klaus, 08066 Zwickau (DE); Scharf, Sören, 08064 Zwickau (DE)
(74) Vertreter: Grauel, Andreas

(57) **Zusammenfassung**

Verfahren zum Trennen von Halbzeugen, die für einen Einsatz in leitungsintegrierten Wärmetauschern bestimmt sind. Verfahrensgemäß bewegt sich die Schneide eines rotierenden Schneidmessers auf die Längsmittelachse des Halbzeugs zu, während sich das Halbzeug um seine Längsmittelachse dreht und/ oder sich das Schneidmesser auf einer Bahn um das Halbzeug herum bewegt. Die Vorrichtung umfasst eine Einrichtung zum Einspannen des Halbzeugs, mit welcher das Halbzeug rotiert werden kann und eine Einrichtung zur Aufnahme eines rotationssymmetrischen Schneidmessers, welche dieses um seine Längsmittelachse rotiert und dessen Schneide auf einer vorbestimmten Bahn auf die Längsmittelachse des Halbzeugs zu bewegt.

## Beschreibung

Die vorliegende Erfindung betrifft ein Verfahren zum Trennen von Halbzeugen, die für einen Einsatz in leitungsintegrierten Wärmetauschern bestimmt sind, sowie eine Vorrichtung zur Durchführung des Verfahrens.

Wesentliches Element von Gegenstromwärmetauschem in Kraftfahrzeug-Hochdruckklimaanlagen sind Wärmetauscherrohre, wie sie beispielsweise aus der EP 1 202 016 bekannt sind. Das darin beschriebene Halbzeug ist ein Mehrkammerprofil, welches einen zentral angeordneten Innenkanal und mehrere, um diesen Innenkanal herum gruppierte Außenkanäle aufweist. Die Zwischenwände der Außenkanäle erstrecken sich dabei radial zur Längsmittelachse.

Bisher werden die Halbzeuge, welche als Wärmetauscherrohr eingesetzt werden, mittels spanender Verfahren abgelängt. Nachteilig ist dabei, dass die entstehenden Späne so heiß sind, dass sie in Verbindung mit der für den Zerspanungsprozess erforderlichen Kühlflüssigkeit an den Innenwänden der Profile festbacken. Trotz der nachfolgenden Reinigung in Entfettungsanlagen mit anschließender Druckluftreinigung bleiben oft Späne in den Halbzeugen zurück und müssen gesondert entfernt werden. Ebenso erfordert die Entfernung der an den Schnittkanten entstehenden Grate einen weiteren, zusätzlichen Arbeitsschritt.

In der DE 601 02 027 T2 wird der Einsatz eines dort so genannten Spin-Schneiders zum Einbringen eines Schlitzes in ein Wärmetauscherrohr vorgeschlagen, der zum Trennen des Außenrohrs und der äußeren Enden der Verbindungsrippen dient. Der dort gezeigte Trennvorgang führt jedoch zwangsläufig zu einer unerwünschten Verformung der Wandungen des Halbzeug auf beiden Seiten des eingebrachten Schlitzes.

Bei einer Verwendung von Wärmetauscherrohren, deren Innen- und Außenkanäle in einer Ebene enden, ist es üblich, dass das Außenrohr zumeist an seiner Außenkontur und der Innenkanal meist an seiner Innenkontur formschlüssig von Anschlusselementen aufgenommen werden. Bei solchen Anwendungen sind durch den Ablängvorgang verformte Endbereiche der Wärmetauscherrohre nicht verwendbar.

Die vorliegende Erfindung stellt sich daher die Aufgabe, ein Verfahren zum Trennen von Halbzeugen, die für den Einsatz in leitungsintegrierten Wärmetauschern bestimmt sind, zur Verfügung zu stellen, welches die beschriebenen Nachteile bekannter Trennverfahren für Wärmetauscherrohre beseitigt. Ferner soll eine Vorrichtung angegeben werden, welche eine Durchführung dieses Verfahrens ermöglicht.

Diese Aufgabe wird erfindungsgemäß durch das Verfahren des Anspruchs 1 gelöst. Die erfindungsgemäße Vorrichtung zur Durchführung des Verfahrens ist Gegenstand des Anspruchs 4. Vorteilhafte Weiterbildungen sind Gegenstand der Unteransprüche.

Die vorliegende Erfindung sieht vor, zur Vermeidung des Entstehens metallischer Späne beim Ablängen, das Halbzeug des Wärmetauscherrohrs mit einem spanlosen Verfahren zu trennen, welches eine Verformung der Rohrenden vermeidet.

Hierfür wird im erfindungsgemäßen Verfahren ein rotierendes Schneidmesser eingesetzt, welches das Halbzeug bevorzugt unter Anwendung des Prinzips des "ziehenden Schnitts" spanlos trennt.

Beim Schneidvorgang bewegt sich die Schneide des rotierenden Schneidmessers vorzugsweise einerseits am äußeren Umfang des Halbzeugs entlang und andererseits auf dessen Längsmittelachse zu. Dabei können diese Bewegungselemente auch so kombiniert sein, dass sich das Halbzeug dreht und die Schneide des rotierenden Schneidmessers sich auf einer im Wesentlichen linearen Bahn auf die Halbzeug-Längsmittelachse zu bewegt. In einer weiteren bevorzugten Ausführung des Verfahrens bewegt sich das Schneidmesser auf einer vorbestimmten Bahn um das Halbzeug herum, während es sich mit seiner Schneide der Längsmittelachse des Halbzeugs nähert. In einer weiteren bevorzugten Ausführung ist es ebenso möglich, dass sich die Bewegungen von Messer und Halbzeug überlagern, dass sich also das Schneidmesser auf einer Bahn um das Halbzeug herum in Richtung auf dessen Längsmittelachse zu bewegt und sich das Halbzeug gleichzeitig um seine Längsmittelachse dreht.

Die Bezeichnung als Halbzeug, das für einen Einsatz in leitungsintegrierten Wärmetauschern bestimmt ist, sowie die hierfür teilweise synonym gebrauchte Bezeichnung Mehrkammerrohr bezieht sich nicht nur auf runde Querschnitte, sondern insbesondere auch auf ovale, abgerundet rechteckförmige oder auch beliebige andere Querschnitte, welche vorzugsweise mehrere Kammern umfassen.

Bevorzugt wird aufgrund der erfindungsgemäß gestalteten Werkzeugschneide, deren genauere Beschreibung weiter unten folgt, eine Verformung des Mehrkammerrohrs auf einer Seite des durch das Trennen entstehenden Spalts völlig vermieden. Erreicht wird dies durch einen gleichmäßigen ziehenden Schnitt, der durch die Rotationsbewegung des Schneidmessers in Verbindung mit der Relativbewegung von Schneidmesser und Halbzeug entsteht.

Bei einer weiteren vorteilhaften Ausführung des erfindungsgemäßen Verfahrens durchtrennt das Schneidmesser das Halbzeug bevorzugt nicht vollständig. Vorzugsweise wird die verbleibende Verbindung in einem weiteren Verfahrensschritt durch Brechen getrennt. Die durch die Verkürzung des Schneidvorgangs in Kauf genommene Bruchkante an der Stirnseite des Innenkanals stellt beispielsweise dann einen Verfahrensvorteil dar, wenn diese Kante im Anschlussstück nicht als Anbindungskante genutzt wird.

Beim das erfindungsgemäßen Trennverfahren, welches auf dem Keilschneiden beruht, werden auf das zu trennende Halbzeug in radialer Richtung Kräfte aufgebracht. Durch die vorteilhafte Gestaltung des Schneidmessers wird erreicht, dass diese Radialkräfte vorzugsweise nur auf einer Seite der Trennfuge wirken. So entstehen zu beiden Seiten des Schneidmessers bevorzugt unterschiedliche Schnittenden. Während die sogenannte Gutseite vorzugsweise exakte Schnittkanten und somit keine Verformungen am Querschnitt des Halbzeugs zeigt, weist die sogenannte Schlechtseite, welche der Gutseite gegenüber liegt, deutliche Verformungen der Halbzeuggeometrie auf.

Folglich ist bei der Ausführung des erfindungsgemäßen Verfahrens darauf zu achten, das zu beschneidende Halbzeug so zur Werkzeugschneide ausgerichtet ist, dass das spätere Wärmetauscherrohr beiderseits unverformte Enden mit sauberen Schnittkanten aufweist. Eine bevorzugte Weiterbildung des erfindungsgemäßen Verfahrens sieht vor, vom Halbzeug Wärmetauscherrohrstücke mit einer Bearbeitungszugabe abgelängen und, vorzugsweise in einem zweiten Trennvorgang, das Wärmetauscherrohr auf das erforderliche Endmaß zu beschneiden, wobei die im Bereich der Bearbeitungszugabe befindlichen Verformungen abgetrennt werden.

Eine andere bevorzugte Weiterbildung des erfindungsgemäßen Verfahrens sieht vor, zwei Gutseiten in einem Schneidvorgang herzustellen. Dabei sind in der nachfolgend beschriebenen Vorrichtung zwei um die gleiche Achse rotierende Schneidmesser so angeordnet, dass die Seiten der Schneidmesser, auf welchen radiale Kräfte in das Halbzeug eingeleitet werden, zueinander weisend angeordnet sind. Somit entstehen, vorzugsweise in einem einzigen Trennschritt, zwei Gutseiten an den beiden äußeren Schnittenden. Die Länge des sich durch die Kräfte des Schneidvorgangs zwischen den Messern verformten Abschnitts wird so minimiert, da sich die von beiden Schnittvorgängen gleichzeitig eingeleiteten Radialkräfte und somit die resultierenden Verformungen in diesem Abschnitt überlagern. Auf diese Weise wird ein relativ geringer Verschnitt ermöglicht.

Die Vorrichtung zum Trennen von Halbzeugen zur Anwendung des erfindungsgemäßen Verfahrens umfasst eine Einrichtung, in welcher ein Halbzeug fest eingespannt wird. Eine erste Ausführungsform der Einspanneinrichtung für das Halbzeug ist vorzugsweise feststehend, während eine zweite Ausführungsform der Einspanneinrichtung bevorzugt so ausgeführt ist, dass das Halbzeug darin um seine Längsmittelachse rotierend angetrieben werden kann.

Die erfindungsgemäße Vorrichtung umfasst weiterhin eine Einrichtung zur Aufnahme eines rotationssymmetrischen Schneidmessers, welche dieses bevorzugt um seine Längsmittelachse rotiert. Eine weitere bevorzugte Ausführungsform der erfindungsgemäße Vorrichtung weist Einrichtungen auf, welche die Schneide des aufgenommenen Schneidmessers auf einer vorbestimmten Bahn auf die Längsmittelachse des Halbzeugs zu bewegt. In einer bevorzugten Weiterbildung der erfindungsgemäßen Vorrichtung wird die Schneide des rotierenden Schneidmessers direkt auf die Längsmittelachse des Halbzeugs zu bewegt, während sich das Halbzeug um diese Längsmittelachse dreht, oder das rotierende Werkzeug bewegt sich vorzugsweise auf einer im Wesentlichen spiralförmigen Bahn mit seiner Schneide auf die Längsmittelachse des Halbzeugs zu. In einer besonders bevorzugten Weiterbildung der erfindungsgemäßen Vorrichtung ist diese so ausgeführt, dass das Werkzeug und das Halbzeug gleichzeitig relativ zueinander bewegt werden.

Eine weitere vorteilhafte Ausführungsform der erfindungsgemäßen Vorrichtung ist ferner so gestaltet, dass die Einrichtung zur Aufnahme des Schneidmessers vorzugsweise gleichzeitig ein zweites Schneidmesser aufnimmt und antreibt. Dabei ist dieses zweite Schneidmesser bevorzugt spiegelbildlich zum ersten Schneidmesser angeordnet. Hierdurch wird erreicht, dass bei einem Schneidevorgang durch ein Halbzeug zu beiden Seiten des durch die beiden Schneidmesser definierten Trennspalts jeweils ein unverformtes Rohrende mit sauberer Trennfläche entsteht. Zwischen den beiden Messerschneiden, welche bevorzugt möglichst nahe aneinander angeordnet sind, fällt ein, in der Länge dem Abstand der beiden Schneidmesser entsprechender verformter Abschnitt des Halbzeugs an.

Das erfindungsgemäße Schneidmesser weist eine Schneide auf, die vorzugsweise asymmetrisch gestaltet ist. In einer bevorzugten Ausführungsform zeigt es dabei eine zur Drehachse senkrechte Fläche F₁, welche mit einer zur Drehachse geneigten Fläche F₃ einen Winkel α einschließt. Die beiden Flächen F₁ und F₃ sowie der von ihnen eingeschossene Winkel a definieren dabei die Schneide des Schneidmessers. Dieser Winkel α weist erfindungsgemäß einen Wert zwischen 10° und 45° auf. Als besonders vorteilhaft hat sich ein Winkel α von 20° erwiesen.

Eine weitere bevorzugte Ausführungsform des erfindungsgemäßen Schneidmessers weist einen Hinterschnitt auf, welcher von einer Fläche F₂, die senkrecht zur Rotationsachse des Schneidmessers steht, definiert wird. Die Fläche F₂ weist dabei vorzugsweise einen Abstand t von der Fläche F₁ auf, welcher zwischen 10 und 200µm beträgt. Besonders bevorzugt beträgt der Abstand t zwischen den Flächen F₁ und F₂ 20µm, da sich ein Hinterschnitt dieser Größe als sehr geeignet gezeigt hat. Eine Verbindungsfläche der zur Drehachse senkrechten Flächen F₁ und F₃ befindet sich vorzugsweise in einem radialen äußeren Bereich des Schneidmessers. Diese Verbindungsfläche ist bevorzugt um einen Winkel β zur Fläche F₁ geneigt. Vorzugsweise weist dieser Winkel β einen Wert zwischen 5° und 15° auf, wobei sich ein Winkel β von 10° als besonders vorteilhaft erwiesen hat.

In einer weiteren bevorzugten Ausführungsform weist die Schneide des erfindungsgemäßen Schneidmessers zur Erzielung einer sauberen Trennfläche und unverformter Rohrenden eine besondere Oberflächenqualität auf. Hierfür sind die Schneidenflanken des rotationssymmetrischen Schneidmessers bevorzugt hochglanzpoliert ausgeführt. In einer bevorzugten Weiterbildung des Schneidmessers beträgt die Härte der Schneidenflanken zwischen HRC 40 und 80. In einer besonders bevorzugten Ausführungsform weisen die Schneidenflanken eine Härte von HRC 60 auf, um günstige Schnittergebnisse zu erzielen.

Das Schneidmesser kann aus jedem geeignetem Werkzeugstahl, mit welchem die beschriebenen Eigenschaften der Messerschneide erreicht werden, hergestellt sein. Dabei können die erforderlichen Eigenschaften auch mit einer speziellen Behandlung wie beispielsweise dem Härten der Schneide erzielt werden. Weiterhin kann das Messer auch aus jedem beliebigen geeigneten anderen Werkstoff hergestellt sein, oder auch aus mehreren unterschiedlichen Werkstoffen bestehen, wie beispielsweise aus einem weichen, elastischen Werkstoff für den Messerkörper und einem harten Werkstoff für die Messerschneide.

Das beschriebene Verfahren zum Trennen von Halbzeugen von Mehrkammerrohren, die für einen Einsatz in leitungsintegrierten Wärmetauschern bestimmt sind, oder die hierzu vorgesehene Vorrichtung kann ebenso vorteilhaft zum Trennen von Halbzeugen, die für andere Einsatzzwecke bestimmt sind, eingesetzt werden.

Weitere Vorteile, Merkmale und Anwendungsmöglichkeiten der vorliegenden Erfindung ergeben sich aus der nachfolgenden Beschreibung in Zusammenhang mit den Figuren. Es zeigt:
- Fig. 1: zwei beispielhafte Querschnitte von Mehrkammerrohren,
- Fig. 2: eine beispielhafte Ausführungsform des Schneidmessers,
- Fig. 3: einen abgeschlossenen Trennvorgang des Verfahrens und
- Fig. 4: eine beispielhafte Anordnung der Schneidmesser zum gleichzeitigen Herstellen zweier unverformter Schnittenden.

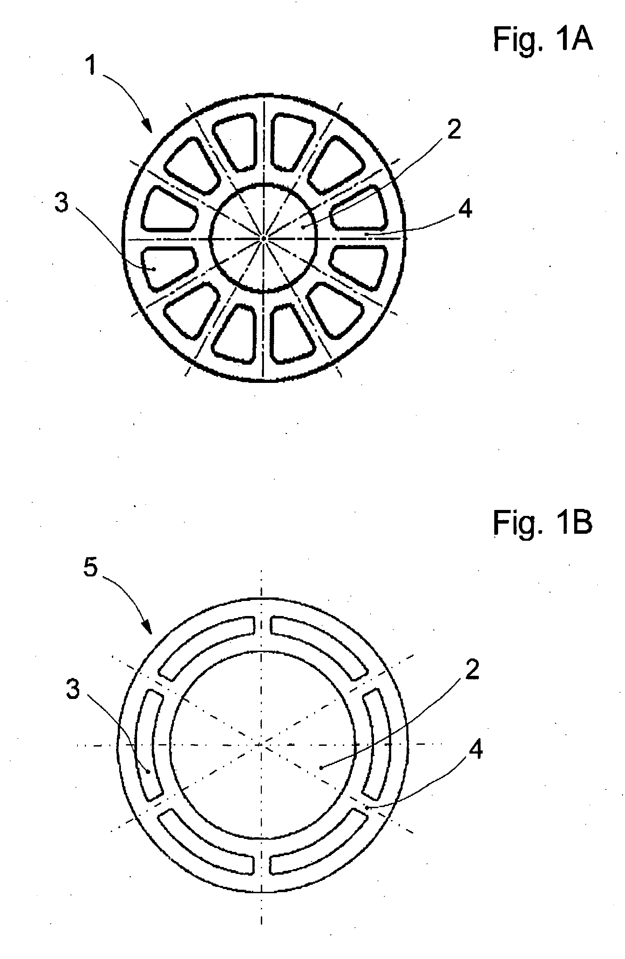

Fig. 1 zeigt in schematischer Darstellung zwei beispielhafte Querschnitte von Mehrkammerrohren 1, 5, wie sie für leitungsintegrierte Wärmetauscher eingesetzt werden. Bei solchen Mehrkammerrohren 1, 5 ist der Innenkanal 2 zumeist mittig im Halbzeug angeordnet und die Außenkanäle 3 liegen konzentrisch zu diesem Innenkanal 2 und sind voneinander durch Zwischenwände 4 getrennt. Die Zwischenwände 4 erstrecken sich, wie beide Mehrkammerprofile 1 und 5 zeigen, etwa in radialer Richtung bezüglich des Innenkanals 2 bzw. seiner Längsmittelachse. Damit bewirken die Zwischenwände 4 eine Aussteifung des Wärmetauscherrohrs 1, 5. Je nach den erforderlichen Volumenströmen für die beiden Medien weisen dabei die Außenkanäle 3 einen größeren oder geringeren Querschnitt als der Innenkanal 2 in den Mehrkammerrohren 1, 5 auf.

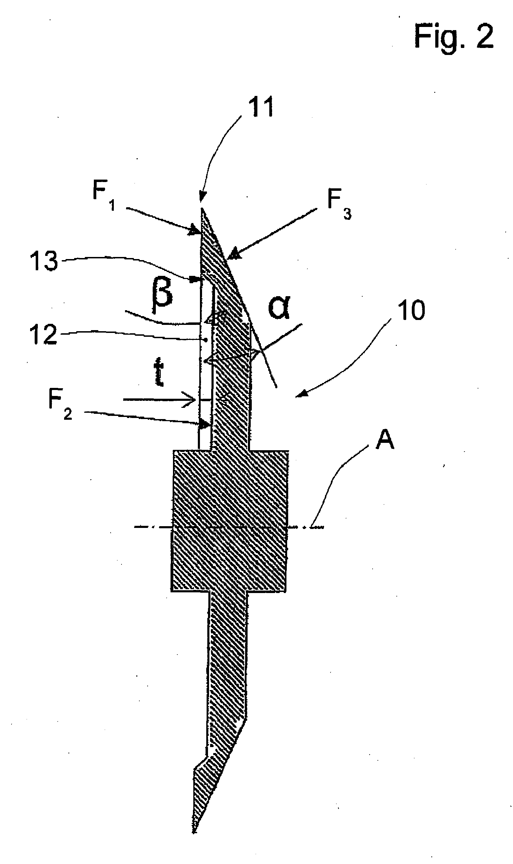

In Fig. 2 ist eine beispielhafte Ausführungsform des Schneidmessers 10 dargestellt. Die Schneide 11 dieses rotationssymmetrischen Schneidmessers ist asymmetrisch bezüglich der Schnittebene, welche senkrecht zur Rotationsachse A des Schneidmessers 10 liegt, gestaltet. Das Schneidmesser weist eine zur Rotationsachse A senkrechte Fläche F₁ auf, welche mit einer zur Rotationsachse A geneigten Fläche F₃ einen Winkel α einschließt. Die Flächen F₁ und F₃ definieren über den von ihnen eingeschlossenen Winkel α die Schneide 11 des Schneidmessers 10. Der Winkel α der beispielhaften Ausführungsform beträgt 20°. Diese Schneidengeometrie eignet sich besonders gut für Aluminiumlegierungen, wie sie für Wärmetauscherrohre verwendet werden.

Weiterhin weist die beispielhafte Ausführungsform des Schneidmessers 10 einen Hinterschnitt 12 auf, welcher einen Abstand t von der Fläche F₁ aufweist. Zur besseren Darstellung zeigt das Schneidmesser 10 in Fig. 2 einen Hinterschnitt, der sehr viel größer als ein erfindungsgemäßer Hinterschnitt dargestellt ist, um seine geometrischen Merkmale darzustellen. So ist die Verbindungsfläche 13, welche die beiden Flächen F₁ und F₂ verbindet, um einen Winkel β zur Fläche F₁ nach innen geneigt.

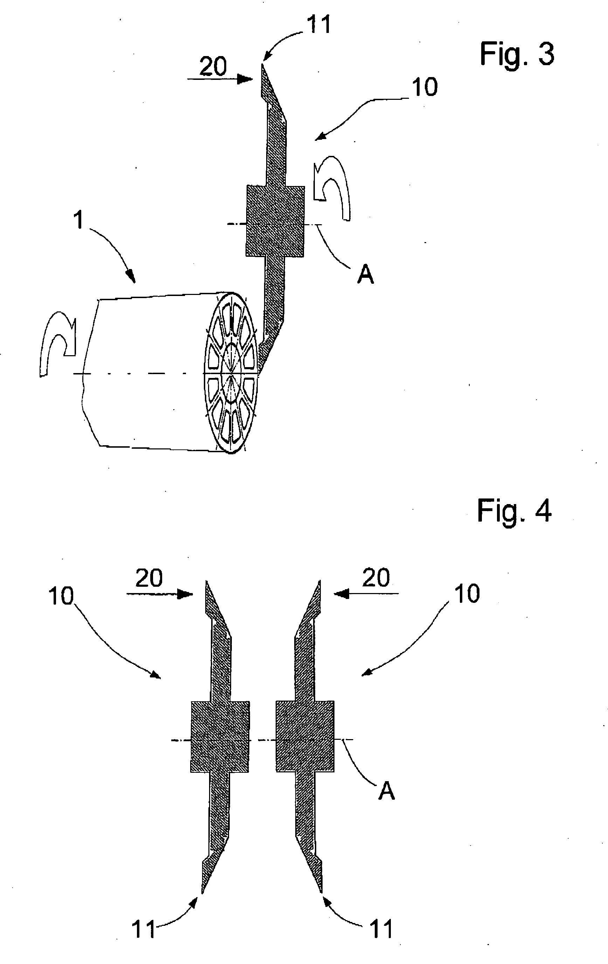

Fig. 3 zeigt einen gerade abgeschlossenen Trennvorgang des Verfahrens. Bei der dargestellten Anordnung werden, wie die Rotationspfeile zeigen, sowohl das Schneidmesser 10, als auch das Mehrkammerrohr 1 in zueinander entgegen laufender Richtung angetrieben. Pfeil 20 zeigt die Seite der Messerschneide 11, welche die Gutseite des Trennvorgangs, also das unverformte Schnittende des Mehrkammerrohrs 1 herstellt. Auf der, der Seite 20 gegenüberliegenden Seite des Trennspalts entsteht eine Schlechtseite am Halbzeug.

Eine beispielhafte Anordnung zum gleichzeitigen Herstellen zweier Gutseiten zu beiden Seiten des Trennspalts ist in Fig. 4 gezeigt. Die zwei Schneidmesser 10 sind so in geringen Abstand zueinander parallel angeordnet, dass sie um die gleiche Rotationsachse A rotieren. Dabei stehen sich die beiden Seiten der Schneiden 11 gegenüber, welche beim Schneidvorgang Schlechtseiten verursachen. An den beiden Außenseiten der Anordnung finden sich die beiden mit dem Pfeil 20 gekennzeichneten Seiten der Schneiden 11, welche beim Trennvorgang die gewünschten unverformten Schnittflächen, also Gutseiten, herstellen. Diese Anordnung stellt gleichzeitig zwei sauber getrennte Seiten beim Trennen des Halbzeugs her. Auf diese Weise wird der Anteil des Verschnitts sowie die Zahl der Trennvorgänge minimiert.

## Patentansprüche

1. Verfahren zum Trennen von Halbzeugen, die insbesondere für einen Einsatz in leitungsintegrierten Wärmetauschern bestimmt sind, welche ein Außenrohr, ein innerhalb des Außenrohrs angeordnetes Innenrohr und eine Vielzahl von Zwischenwänden aufweisen, **dadurch gekennzeichnet, dass** eine Bewegung der Schneide (11) eines rotierenden Schneidmessers (10) in Richtung der Längsmittelachse des Halbzeugs (1, 5) von einer gleichzeitigen Relativbewegung in Umfangsrichtung des Halbzeugs (1, 5) zwischen dem Schneidmesser (10) und dem Halbzeug (1, 5) überlagert wird.

2. Verfahren zum Trennen von Halbzeugen gemäß Anspruch 1, **dadurch gekennzeichnet, dass** die Relativbewegung in Umfangsrichtung des Halbzeugs (1, 5) durch eine Drehung des Halbzeugs (1, 5) um seine Längsmittelachse erzeugt wird.

3. Verfahren zum Trennen von Halbzeugen gemäß Anspruch 1, **dadurch gekennzeichnet, dass** die Relativbewegung in Umfangsrichtung des Halbzeugs (1, 5) durch eine Bewegung des Schneidmessers (10) auf einer Bahn um das Halbzeug (1, 5) herum erzeugt wird.

4. Verfahren zum Trennen von Halbzeugen gemäß Anspruch 1, **dadurch gekennzeichnet, dass** die Relativbewegung in Umfangsrichtung des Halbzeugs (1, 5) durch eine Überlagerung der Drehung des Halbzeugs (1, 5) um seine Längsmittelachse und der Bewegung des Schneidmessers (10) auf einer Bahn um das Halbzeug (1, 5) herum erzeugt wird.

5. Verfahren zum Trennen von Halbzeugen gemäß mindestens einem der Ansprüche 1 bis 4, **dadurch gekennzeichnet, dass** das Schneidmesser (10) das Halbzeug (1, 5) nicht vollständig durchtrennt und dass die verbleibende Verbindung durch Brechen getrennt wird.

6. Verfahren zum Trennen von Halbzeugen gemäß mindestens einem der Ansprüche 1 bis 5, **dadurch gekennzeichnet, dass** in einem Verfahrensschritt gleichzeitig zwei Gutseiten hergestellt werden.

7. Vorrichtung zum Trennen von Halbzeugen insbesondere zur Anwendung des Verfahrens gemäß mindestens einem der Ansprüche 1 bis 6 **dadurch gekennzeichnet, dass** die Vorrichtung umfasst:
eine Einrichtung zum Einspannen des Halbzeugs, welche das Halbzeug (1, 5) drehfest lagert oder das Halbzeug (1, 5) rotiert und
eine Einrichtung zur Aufnahme eines Schneidmessers (10), welche dieses um seine Längsmittelachse (A) rotiert und dessen Schneide (11) auf einer vorbestimmten Bahn auf die Längsmittelachse des Halbzeugs (1, 5) zu bewegt.

8. Vorrichtung zum Trennen gemäß Anspruch 7 **dadurch gekennzeichnet, dass** die Einrichtung zur Aufnahme des Schneidmessers (10) gleichzeitig ein zweites Schneidmesser (10) aufnimmt, welches spiegelbildlich zum ersten Schneidmesser (10) angeordnet ist.

9. Vorrichtung zum Trennen von Halbzeugen gemäß mindestens einem der Ansprüche 7 und 8, **dadurch gekennzeichnet, dass** die Schneide (11) des Schneidmessers (10) asymmetrisch gestaltet ist.

10. Vorrichtung zum Trennen von Halbzeugen gemäß Anspruch 9, **dadurch gekennzeichnet, dass** das Schneidmesser (10) eine zur Rotationsachse (A) senkrechte Fläche (F₁) aufweist, welche mit einer zur Drehachse geneigten Fläche (F₃) einen Winkel (a) einschließt.

11. Vorrichtung zum Trennen von Halbzeugen gemäß Anspruch 10, **dadurch gekennzeichnet, dass** der Winkel (α) einen Wert zwischen 10° und 45°, insbesondere 20° aufweist.

12. Vorrichtung zum Trennen von Halbzeugen gemäß mindestens einem der Ansprüche 9 bis 11, **dadurch gekennzeichnet, dass** das rotationssymmetrische Schneidmesser (10) einen Hinterschnitt (12) ausweist.

13. Vorrichtung zum Trennen von Halbzeugen gemäß Anspruch 12, **dadurch gekennzeichnet dass** die Fläche (F₂), welche den Hinterschnitt (12) definiert, einen Abstand (t) von der Fläche (F₁) aufweist, welcher zwischen 10 und 200µm und insbesondere 20µm beträgt.

14. Vorrichtung zum Trennen von Halbzeugen gemäß Anspruch 13, **dadurch gekennzeichnet, dass** die Verbindungsfläche (13) der zur Rotationsachse (A) senkrechten Flächen (F₁) und (F₂) um einen Winkel (β) zur Fläche (F₁) nach innen geneigt ist, welcher einen Wert zwischen 5° und 15° und insbesondere 10° aufweist.

15. Vorrichtung zum Trennen von Halbzeugen gemäß mindestens einem der Ansprüche 9 bis 14, **dadurch gekennzeichnet, dass** die Schneidenflanken des Schneidmessers (10) hochglanzpoliert sind.

16. Vorrichtung zum Trennen von Halbzeugen gemäß mindestens einem der Ansprüche 9 bis 15, **dadurch gekennzeichnet, dass** die Schneidenflanken des Schneidmessers (10) eine Härte zwischen HRC 40 und 80 und insbesondere HRC 60 aufweisen.
